# EUROPEAN PATENT SPECIFICATION

(11) **EP 1 185 597 B1**
(45) Date of publication and mention of the grant of the patent: **22.09.2004**
(21) Application number: 00935203.0
(22) Date of filing: 09.06.2000
(51) Int. Cl.: C09J 153/02

(54) **ADHESIVE COMPOSITION AND PROTECTIVE FILM CONTAINING THE SAME**
KLEBSTOFFZUSAMMENSETZUNG UND DIESE ENTHALTENDEN SCHUTZFILM
COMPOSITION ADHESIVE ET FILM PROTECTEUR CONTENANT CETTE COMPOSITION

(30) Priority: 11.06.1999 EP 99111448
(43) Date of publication of application: 13.03.2002
(73) Proprietor: KRATON Polymers Research B.V., 1031 CM Amsterdam (NL)
(72) Inventor: DE CLIPPELEIR, Johan, Marcel, Maria, Albert, B-1348 Ottignies, Louvain-La-Neuve (BE); VERMUNICHT, Geert, Emiel, Anna, B-1348 Ottignies, Louvain-La-Neuve (BE); VAN DE VLIET, Birgitte, Maria, Ludovica, Christine, B-1348 Ottignies, Louvain-La-Neuve (BE); GROPP, Roland, London Greater London SE1 7NA (GB)
(74) Representative: Kortekaas, Marcel C. J. A.
(86) International application number: PCT/EP2000/005408
(87) International publication number: WO 2000/077118

(56) References cited:
- EP-A- 0 885 942
- US-A- 4 361 663
- US-A- 4 361 672
- US-A- 5 418 052
- US-A- 5 459 193
- US-A- 5 559 165

## Description

### Field of the Invention

The present invention relates to adhesive compositions for protective films and to protective films, in particular protective films containing an adhesive layer on a flexible substrate, such as a thin substrate of a polyolefin, polyamide or a polyester.

### Background of the Invention

Protective films are well known in the art. A Protective film is a pressure sensitive adhesive tape or sheet intended for temporary application onto a surface, to protect that surface from adhesion of dust and/or from damage. Examples of surfaces to be protected by protective films are synthetic resin boards, decorative laminated sheets and metal plates. Protective films are e.g. used to protect the coated metal surface of cars during assembly of the car and transport from the manufacturing plant to car dealers.

It will be appreciated that protective films must be tacky enough and have enough holding power to stick to a variety of surfaces; must be stable enough not to quickly deteriorate under the influence of UV; and must be easily removable from the surface it is protecting, without leaving any traces of adhesive.

EP 0 519 278 A2 describes an automotive paint film - protective sheet comprising a substrate having formed on one side thereof a rubber-based pressure-sensitive adhesive having a dynamic modulus of from 2x10⁵ to 7x10⁶ dyne/cm². The pressure-sensitive adhesives described therein consist essentially of an A-B-A block copolymer, wherein A is a styrene block and B is a hydrogenated butadiene block, a hydrogenated tackifying resin, and optionally an acrylic polymer.

A disadvantage of the protective films described herein is that the pressure sensitive adhesive is too tacky which makes it difficult to remove the protective film or to manually apply the protective film. A further disadvantage is that the pressure sensitive adhesive composition is difficult tc handle. This makes application of the protective film cumbersome. Moreover, according to this publication, the protective film is prepared by coating a solution or melt of the pressure sensitive adhesive onto a substrate. It would be desirable if a pressure sensitive adhesive composition would be found that can be co-extruded with the substrate.

US 5,427,850 describes a protective film consisting essentially of an A-B-A block copolymer, wherein A is a styrene block and B is an optionally hydrogenated butadiene or isoprene block; a tackifying resin and a polyolefin selected from low density polyethylene, linear low density polyethylene, medium density polyethylene, high density polyethylene and an ethylene-α-olefin copolymer wherein said polyolefin has a melt index of 0.1 to 30 g/10 min. and less than 1.0% by weight of the polyolefin can be extracted in n-pentane. As outlined in the Examples, in order to achieve this commercially available polyolefin is first subjected to an extraction treatment prior to use in the preparation of adhesive compositions for protective films.

US 5,427,850 reports that when the content of extractable low molecular weight products in the polyolefin used exceed 1.0% by weight the low molecular weight products adversely affect the tackiness of the resultant pressure sensitive adhesive composition as temperature changes and its adhesive strength is hence lowered.

It would be desirable if an adhesive composition could be found which does not have to contain polyolefins that have been subjected to an extraction treatment.

A number of Examples reported in US 5,427,850 state that the protective film support (polyethylene) and pressure sensitive adhesive were extruded by a two-layer co-extrusion technique to produce a protective film.

It would be desirable if a pressure sensitive adhesive composition would be found that fully meets the current requirements for an adhesive layer of a protective film, that can be co-extruded with a protective film support to produce a protective film, and which adhesive composition can be produced, transported and stored independently of the protective film manufacturing facility.

Surprisingly, such adhesive compositions and protective films have now been found.

### Summary of the Invention

Therefore, according to a first aspect, the present invention relates to an adhesive composition comprising:
(i) a block copolymer containing at least two poly(monovinyl aromatic hydrocarbon) blocks and at least one hydrogenated poly(conjugated diene) block;
(ii) 20 to 80 parts by weight of an at least partially hydrogenated tackifying resin per 100 parts by weight of block copolymer;
(iii) 0 to 40 parts by weight of aromatic resin per 100 parts by weight of block copolymer;
(iv) 10 to 60 parts by weight of a polybutene-1 per 100 parts by weight of block copolymer wherein the polybutene-1 has a weight average molecular weight in the range of 60,000 to 1,000,000, and wherein the polybutene-1 is a homopolymer or polybutene-1 copolymer in which the non-butene comonomer content is in the range from 1 to 50 mole%; and
(v) 0 to 25 parts by weight of plasticiser per 100 parts by weight of block copolymer.

According to a second aspect, the present invention relates to a process for preparing pellets containing the above adhesive composition. The process involves use of a, preferably twin-screw, extruder and an underwater pelletizer.

According to one embodiment, the present invention relates to a process for preparing pellets containing an adhesive composition comprising:
(i) dry-blending a block copolymer containing at least two poly(monovinyl aromatic hydrocarbon) blocks and at least one hydrogenated poly(conjugated diene) block, or a blend of the block copolymer with up to 25 parts by weight of plasticiser per 100 parts by weight of block copolymer, with 20 to 80 parts by weight of an at least partially hydrogenated tackifying resin per 100 parts by weight of block copolymer, 10 to 60 parts by weight of a polybutene-1 per 100 parts by weight of block copolymer wherein the polybutene-1 is a homopolymer or polybutene-1 copolymer in which the non-butene comonomer content is in the range from 1 to 50 mole%, and optionally up to 40 parts by weight of aromatic resin per 100 parts by weight of block copolymer to obtain a dry-blend;
(ii) extruding the dry-blend in an extruder to obtain an extrudate;
(iii) pelletizing the extrudate with an underwater pelletizer to obtain wet pellets; and
(iv) drying the wet pellets to obtain pellets containing the adhesive composition, and optionally treating the wet or dry pellets with a dusting agent in an amount of 0.1 to 10% by weight of the total composition.

According to another embodiment, the present invention relates to a process for preparing pellets containing an adhesive composition comprising:
(i) adding a block copolymer containing at least two poly(monovinyl aromatic hydrocarbon) blocks and at least one hydrogenated poly(conjugated diene) block, or a blend of the block copolymer with up to 25 parts by weight of plasticiser per 100 parts by weight of block copolymer; 20 to 80 parts by weight of an at least partially hydrogenated tackifying resin per 100 parts by weight of block copolymer; 10 to 60 parts by weight of a polybutene-1 per 100 parts by weight of block copolymer wherein the polybutene-1 is a homopolymer or polybutene-1 copolymer in which the non-butene comonomer content is in the range from 1 to 50 mole%, and optionally up to 40 parts by weight of aromatic resin per 100 parts by weight of block copolymer to separate feed inlet openings in an extruder;
(ii) blending and extruding the components in the extruder to obtain an extrudate;
(iii) pelletizing the extrudate with an underwater pelletizer to obtain wet pellets; and
(iv) drying the wet pellets to obtain pellets containing the adhesive composition, and optionally treating the wet or dry pellets with a dusting agent in an amount of 0.1 to 10% by weight of the total composition.

According to a third aspect, the present invention relates to a protective film comprising an adhesive layer and a substrate layer, wherein the adhesive layer comprises:
(i) a block copolymer containing at least two poly(monovinyl aromatic hydrocarbon) blocks and at least one hydrogenated poly(conjugated diene) block;
(ii) 20 to 80 parts by weight of an at least partially hydrogenated tackifying resin per 100 parts by weight of block copolymer;
(iii) 0 to 40 parts by weight of aromatic resin per 100 parts by weight of block copolymer;
(iv) 10 to 60 parts by weight of a polybutene-1 per 100 parts by weight of block copolymer wherein the polybutene-1 is a homopolymer or polybutene-1 copolymer in which the non-butene comonomer content is in the range from 1 to 50 mole%; and
(v) 0 to 25 parts by weight of plasticiser per 100 parts by weight of block copolymer.

According to a fourth aspect, the present invention relates to a process for preparing a protective film by co-extrusion of an extrudable substrate layer and an adhesive layer as defined herein, which process comprises feeding an adhesive composition to form the adhesive layer to a first extruder and feeding the substrate composition to form the substrate layer to a second extruder, melting the adhesive composition and the substrate composition and conveying the substantially molten adhesive composition and substrate composition with the first and second extruder respectively, at the same time to a die in hydraulic communication with the first and second extruder and co-extruding a film comprising the adhesive layer and the substrate layer. The die is preferably a multi-manifold die.

The extrusion process downstream of the first and second extruder is typically a cast film process or a blown film process. Both processes are well known in the art and have been described in the Encyclopedia of Chemical Technology (Kirk-Othmer), 1996, volume 19, in the chapter on plastic processing, pages 290-316, which pages are herein incorporated by reference.

According to a fifth aspect, the present invention relates to articles containing a protective film as defined herein.

### Detailed description of the Invention

The block copolymer (i) may be linear or radial, including linear triblock copolymers (ABA), multi-armed block copolymers ((AB)ₙX), asymmetric block copolymers, such as ((AB)ₙX(B')ₘ, with A representing a monovinyl aromatic hydrocarbon polymer block, B and B' representing a hydrogenated conjugated diene polymer block, n being an integer of 2 or higher, preferably from 2 to 6, m being an integer of at least 1, preferably from 1 to 4, and X representing the residue of a coupling agent. The block copolymer may contain up to 40% by weight, relative to the total amount of block copolymer of a diblock copolymer AB, preferably up to 30% by weight, more preferably up to 25% by weight. If it is desired that the block copolymer (i) contains an amount of diblock copolymer, the latter is typically present in an amount of at least 5% by weight, preferably at least 10% by weight of the block copolymer (i).

The apparent molecular weight of diblock copolymer (AB) (if present) is typically in the range of from 40,000 to 270,000. Preferably, the diblock copolymer apparent molecular weight is in the range of from 40,000 to 180,000, more preferably in the range of from 60,000 to 150,000.

The block copolymer (i) may, for example, be prepared by coupling at least two diblock copolymer molecules AB together. As the coupling efficiency is not 100%, the block copolymer (i) will contain uncoupled diblock copolymer. The block copolymer (i) may however also consist of a blend of block copolymers, one being a diblock copolymer.

The coupling agent may be any di- or polyfunctional coupling agent known in the art, for example, dibromoethane, silicon tetrachloride, diethyl adipate, divinylbenzene, dimethyldichlorosilane, methyl dichlorosilane. Particularly preferred in such a preparation route is the use of non-halogen containing coupling agents, for example gamma-glycidoxypropyl-trimethoxysilane, and diglycidylether of bisphenol A.

The block copolymer to be used in the compound of the present invention may be prepared by any method known in the art including the well known full sequential polymerisation method, optionally in combination with re-initiation, and the coupling method, as illustrated in e.g. U.S. Patents Nos. 3,231,635; 3,251,905; 3,390,207; 3,598,887 and 4,219,627 and EP 0413294 A2, EP 0387671 B1, EP 0636654 A1, and WO 94/22931.

The resultant block copolymer is hydrogenated in accordance with any one of the known methods (for example, the method as disclosed in U.S. Patent 3,700,633 which is herein incorporated by reference) to obtain the hydrogenated block copolymer (i). In the hydrogenated block copolymer (i) to be used in the present invention, typically at least 80%, preferably at least 90%, more preferably at least 95% of the double bonds in the conjugated diene block(s) is hydrogenated. The hydrogenation degree can be analysed using the nuclear magnetic resonance (NMR) method.

The mono-vinyl aromatic monomer is typically selected from styrene, C₁-C₄ alkylstyrene and C₁-C₄ dialkylstyrene, in particular styrene, α-methylstyrene, o-methylstyrene or p-methylstyrene, 1,3-dimethylstyrene, p-tert.-butylstyrene or mixtures thereof, most preferably styrene.

The conjugated diene monomer is typically a conjugated diene monomer containing from 4 to 8 carbon atoms, such as 1,3-butadiene, 2-methyl-1,3-butadiene (isoprene), 2,3-dimethyl-1,3-butadiene, preferably butadiene or isoprene or mixtures thereof, most preferably butadiene.

The 1,2-vinyl content of a butadiene block prior to hydrogenation is typically at least 25% by weight. Preferably, the 1,2-vinyl content is in the range of from 30 to 90% by weight, more preferably from 35 to 80% by weight.

Techniques to enhance the vinyl content of the butadiene portion are well known and may involve the use of polar compounds such as ethers, amines and other Lewis bases and more in particular those selected from the group consisting of dialkylethers of glycols. Most preferred modifiers are selected from dialkyl ether of ethylene glycol containing the same or different terminal alkoxy groups and optionally bearing an alkyl substituent on the ethylene radical, such as monoglyme, diglyme, diethoxyethane, 1,2-diethoxy-propane, 1-ethoxy-2,2-tert-butoxyethane, of which 1,2-diethoxypropane is most preferred.

The content of monovinyl aromatic hydrocarbon of the final block copolymer is preferably in the range of from 5 to 45% by weight, and more preferably 10 to 25% by weight, based on the total block copolymer.

The total apparent molecular weight of the block copolymer is preferably in the range from 70,000 to 310,000, e.g. from 160,000 to 300,000 g/mol.

Tackifying resins are well known to those skilled in the art and a wide variety of different tackifying resins is available commercially. The tackifying resin to be used in the present invention is at least partially hydrogenated and is preferably a partially or fully hydrogenated hydrocarbon resin.

The (partially) hydrogenated tackifying resin preferably has an unsaturation index (Uᵢ) of up to 22%, more preferably of up to 20%.

The unsaturation index is determined by ¹³C NMR according to the procedure outlined in Canadian patent specification CA 1337218, incorporated herein by reference.

The tackifying resin preferably has a softening point as determined by the Ring and Ball method (ASTM E28) in the range of from 75 to 140 °C, say of from 75 to 125 °C, more preferably 80 to 105 °C.

According to a particularly preferred embodiment, the tackifying resin is a fully hydrogenated hydrocarbon resin. A fully hydrogenated hydrocarbon resin typically has an unsaturation index of less than 5%.

The tackifying resin is present in an amount from 20 to 80 parts by weight (pbw) per 100 parts by weight of block copolymer. An adhesive composition containing less than 20 pbw will not have sufficient tack and a composition containing more than 80 pbw will be too tacky and will be difficult to coextrude. Preferably, the tackifying resin is present in an amount from 25 to 65 pbw, more preferably from 30 to 55 pbw, per 100 parts by weight of block copolymer.

The polybutene-1 typically has a crystallinity of less than 80%. Crystallinity is determined with wide-angle X-ray diffraction after 7 days. Preferably, the crystallinity is in the range from 0 to 60%.

The polybutene-1 is preferably a polybutene-1 copolymer.

Preferably, the polybutene-1 (polybutylene) referred to herein is one butene-1 polymer containing from 80% preferably from 95% and more preferably from 97% by weight of isotactic portions. The weight average molecular weight ranges from 60,000 to 1,000,000 g/mol, determined by Gel Permeation Chromatography, using polybutene-1 standards. Suitable poly-1-butenes also have a density of from 0.875 to 0.925, preferably from 0.890 to 0.920. Suitable poly-1-butenes have melt flow indices in the range of from 0.05 to 400, preferably 0.05 to 300, more preferably from 0.1 to 200, even more preferably from 0.2 to 20, and most preferably from 0.4 to 5 dg/min, as determined by ASTM D-1238 Condition E, at 190 °C and 2.16 kg. The intrinsic viscosity of the poly-1-butene may range from 0.07, preferably from 7 at 130 °C in "decalin" (decahydronaphthalene).

These poly-1-butene polymers including their methods of preparation, and their properties are known in the art. An exemplary reference containing additional information on polybutylene is U.S. Patent No. 4,960,820 which is herein incorporated by reference.

A poly-1-butene polymer (PB) usable herein is either a butene-1 homopolymer or a copolymer. If a butene-1 copolymer is used, the non-butene comonomer content is from 1 to 50 mole%, preferably from 1 to 30 mole% of either ethylene, propylene, or an alpha olefin having from 5 to 8 carbon atoms. The poly-1-butenes can be modified to increase surface activity by reaction with, for example, maleic anhydride.

Suitable poly-1-butenes can be obtained, for example, in accordance with Ziegler-Natta low-pressure polymerization of butene-1, e.g. by polymerizing butene-1 with catalysts of TiCl₃ or TiCl₃-AlCl₃ and Al(C₂H₅)₂Cl at temperatures of 10-100 °C, preferably 20-40 °C, e.g. according to the process described in DE-A-1,570,353. It can also be obtained, for example by using TiCl₄-MgCl₂ catalysts. High melt indices are obtainable by further processing the polymer by peroxide cracking, thermal treatment or irradiation to induce scissions leading to a higher melt flow material.

Polybutene-1 PB-8310 and PB-0300, marketed by Montell are particularly suitable polymers. PB-8310 is a copolymer of butene-1 and 6 mole% ethylene, with a melt index of 3.0 g/10 min. at 190 °C and 2.16 kg, a crystallinity of 34% and a density of 0.895. PB-0300 is a homopolymer of butene-1, with a melt index of 4.0 g/10 min. at 190 °C and 2.16 kg, a crystallinity of 55% and a density of 0.915.

The polybutene-1 homopolymer typically has a crystallinity of at least 30% by weight when measured with wide-angle X-ray diffraction after 7 days, but preferably less than 70% by weight.

The polybutene-1 is typically present in an amount from 5 to 60 parts by weight (pbw) per 100 parts by weight of block copolymer. An adhesive composition containing less than 5 pbw will not have a stable peel adhesion strength. Rather, the peel adhesion will increase upon ageing. A composition containing more than 60 pbw will have a too low peel adhesion. Preferably, the polyolefin is present in an amount from 8 to 40 pbw, more preferably from 10 to 30 pbw, per 100 parts by weight of block copolymer.

Plasticisers are well known to those skilled in the art. Typically, the hardness of polymer compound is decreased by adding a plasticiser. The plasticiser is typically substantially compatible with at least the hydrogenated conjugated diene block(s) of the block copolymer (a).

Examples of plasticisers commonly used include oil, preferably naphthenic or paraffinic oil, more preferably paraffinic oil. Examples of alternative plasticisers which may be used in the compound of the invention are, oligomers of randomly or sequentially polymerised styrene and conjugated diene, oligomers of conjugated diene, such as butadiene or isoprene, liquid polybutene-1, and ethylene-propylene-diene rubber, all having a weight average molecular weight in the range from 300 to 35,000, preferably from 300 to 25,000, more preferably from 500 to 10,000.

The adhesive composition may further comprise a poly(monovinyl aromatic block) compatible resin. Such resins are well known to those skilled in the art. Examples of suitable resins include coumarone-indene resin, polyindene resin, poly(methyl indene) resin, polystyrene resin, vinyltoluene-alphamethylstyrene resin, alphamethylstyrene resin and polyphenylene ether, in particular poly(2,6-dimethyl-1,4-phenylene ether).

Poly(monovinyl aromatic hydrocarbon) compatible resins are e.g. sold under the tradenames HERCURES, ENDEX, KRISTALLEX, NEVCHEM and PICCOTEX.

The adhesive composition preferably further comprises a dusting agent in an amount from 0.1 to 10% by weight, more preferably from 0.2 to 5% by weight, basis the total composition.

The dusting agent is a very fine powder having on average a particle size between 1 nm and 100 µm, preferably between 5 nm and 10 µm. By using a dusting agent, an adhesive composition which is free flowing can be obtained. As used herein the term "free flowing adhesive composition" refers to an adhesive composition of the present invention which contains a dusting agent and in which the particles of the composition do not adhere to one another. In principle any such fine powder may be employed but it is preferred that a polyolefin, such as polyethylene, silica, talc or calcium carbonate powder is used. Examples of commercially available silica powders include, but are not limited to, AEROSIL R972 (average particle size about 16 nm), AEROSIL 200 (average particle size about 12 nm), SIPERNAT, DUROSIL, DUREX and ULTRASIL (average particle size about 16 nm) (AEROSIL, SIPERNAT, DUROSIL, DUREX and ULTRASIL are trademarks). Examples of commercially available calcium carbonate powders include, but are not limited to, DURCAL 5 (average particle size about 6 µm) and MILLICARB (average particle size about 3 µm) (DURCAL and MILLICARB are trademarks). The dusting agent is typically used in an amount of from 0.05 to 10% by weight, preferably from 0.1 to 5% by weight, based on total weight of the composition.

The adhesive composition may further comprise from 0 to 100 parts by weight of filler per 100 parts by weight of block copolymer. Examples of suitable fillers include silica and calcium carbonate.

In addition to the above mentioned components, the adhesive composition may contain one or more auxiliary components such as stabilisers, flame retardants, anti-blocking agents and anti-slipping agents. These components are typically present in an amount from 0.1 to 10% by weight, preferably 0.5 to 5% by weight, basis the total adhesive composition.

The present invention further relates to a process for preparing pellets containing the above adhesive composition. The process involves use of an extruder and an underwater pelletizer.

Extruders are well known to those skilled in the art and are available commercially. Preferably, the extruder is a twin-screw extruder, more preferably a co-rotating twin-screw extruder.

Underwater pelletizers are well known to those skilled in the art and are available commercially. Other pelletizers such as face cutters and strand granulators have been found to be less suitable as use of face cutters or strand granulators does not result in uniform pellet size distributions. Furthermore, most of the adhesive compositions have the tendency to agglomerate in a face cutter or stick to the knives of a strand granulator, preventing easy production of these adhesive compositions in pellet form.

In the process for producing pellets with an underwater pelletizer it has been found advantageous to add an antifoaming agent and a detergent to the pelletizer water to avoid agglomeration of the pellets.

The present invention further relates to protective films consisting essentially of an adhesive layer and a substrate layer. If desired, the adhesive layer may further be covered with a protective laminated sheet such as siliconised paper.
the substrate layer is preferably an extrudable substrate layer. Examples include polyolefins such as polyethylene, polypropylene and copolymers of polyethylene and polypropylene.

The invention will now be further illustrated with reference to the following examples.

### EXAMPLE 1

Pellets containing an adhesive composition were prepared by first dry-blending a block copolymer, a hydrogenated tackifying resin, a polyolefin and an antioxidant in a tumbler mixer for 30 minutes. The dry-blend thus obtained was fed into a MARIS (trademark) single port twin-screw extruder fitted with a GALA (trademark) underwater pelletizer. A detergent and an antifoaming agent (TEGO anti foam 1488 0.01% by weight in HORDEMER PE03 soap was added to the pelletizer water to avoid agglomeration of the wet pellets (TEGO and HORDEMER are trademarks). The wet pellets were dried by centrifugal drier with dry air flow. Talc was added as a dusting agent.

The block copolymer used in the Examples KRATON G1657, which is a linear block copolymer having two terminal styrene blocks and one hydrogenated butadiene midblock (KRATON is a trademark). KRATON G1657 is a coupled block copolymer containing 30 wt% diblock copolymer. The polystyrene content is 13 wt%.

The polyolefins used in the Examples are polybutene-1 copolymers PB8310 and PB0300 marketed by Montell.

The tackifying resin used in the Examples is marketed as REGALITE R101 (REGALITE is a trademark). REGALITE R101 is a hydrogenated hydrocarbon resin having a softening point of 99 °C.

The antioxidant used in the Examples is tetrakisethylene-(3,5-di-tertiary-butyl-4-hydroxy-hydrocinnamate)methane, marketed as IRGANOX 1010 (IRGANOX is a trademark).

The following pellets were made and the Shore A hardness and Melt Flow Rate were determined:

**Table 1**

| | Composition 1 | Composition 2 |
|---|---|---|
| KRATON G1657 | 100 pbw | 100 pbw |
| REGALITE R101 | 48 pbw | 36 pbw |
| PB 8310 | - | 12 pbw |
| PB 0300 | 12 pbw | 12 pbw |
| Talc | 0.75 %wt. | 0.75 %wt. |
| IRGANOX 1010 | 1 %wt. | 1 %wt. |
| Hardness Shore A | 46 | 39 |
| MFR 190 °C/2.16 kg | 15 g/10 min | 10 g/10 min |
| MFR 150 °C/2.16 kg | 1.9 g/10 min | 1.1 g/10 min |

The above compositions 1 and 2 were free-flowing pellets.

Compositions 1 and 2 were co-extruded with polyethylene in a 40 mm single screw co-extruder having a Length/Diameter ratio of 27. The compression ratio was 1.5. A two-layer protective film was co-extruded at a temperature ranging from 100 °C (inlet) to 150 °C (outlet). The protective film consisted of a 25 µm adhesive layer and a 75 µm polyethylene substrate layer. The polyethylene used for the substrate was LDPE ex. DSM with a Melt Index (polyethylene condition) of 4.4.

The films 1 and 2, containing adhesive compositions 1 or 2 respectively, were laminated on the adhesive side with siliconised paper for easy handling.

Adhesive properties, puncture resistance and optical properties were determined and compared to the polyethylene substrate (PE) not containing an adhesive layer. Results are reported in Table 2.

**Table 2**

| | Film 1 | Film 2 | PE |
|---|---|---|---|
| 180° PA to steel in N/2.5 cm | 6 | 4 | 0 |
| 180° PA to steel after 24 h at 120 °C in N/2.5 cm | 13 | 14 | 0 |
| Protrusion puncture resistance (adhesive side), N | 150 | 170 | - |
| Protrusion puncture travel distance, mm | 95 | 120 | - |
| Protrusion puncture resistance (PE side), N | 133 | 140 | 70 |
| Protrusion puncture travel distance, mm | 90 | 97 | 50 |
| 45° Specular gloss | 53.7 | 53.2 | 55.1 |
| Haze transmittance | 9.8 | 11.3 | 8.1 |
| Clarity transmittance | 75.8 | 71.7 | 88.6 |

The various tests were carried out as follows:

| | |
|---|---|
| 180° Peel Adhesion to steel | ASTM D3330 |
| Protrusion puncture resistance | ASTM D4649 |
| Protrusion puncture travel distance | ASTM D4649 |
| 45° Specular gloss | ASTM D2457 |
| Haze transmittance | ASTM D1003 |
| Clarity transmittance | ASTM D1003 |

These results show that free flowing adhesive compositions can be prepared that are suitable for protective film production by co-extrusion. The adhesives properties of the obtained protective films demonstrate the precise control of peel adhesion. Moreover, the puncture resistance of protective films according to the invention is indeed very good.

## Claims

1. An adhesive composition comprising:
(i) a block copolymer containing at least two poly(monovinyl aromatic hydrocarbon) blocks and at least one hydrogenated poly(conjugated diene) block;
(ii) 20 to 80 parts by weight of an at least partially hydrogenated tackifying resin per 100 parts by weight of block copolymer;
(iii) 0 to 40 parts by weight of aromatic resin per 100 parts by weight of block copolymer;
(iv) 10 to 60 parts by weight of a polybutene-1 per 100 parts by weight of block copolymer, wherein the polybutene-1 has a weight average molecular weight in the range of 60,000 to 1,000,000, and wherein the polybutene-1 is a homopolymer or polybutene-1 copolymer in which the non-butene comonomer content is in the range from 1 to 50 mole%; and
(v) 0 to 25 parts by weight of plasticiser per 100 parts by weight of block copolymer.

2. Adhesive composition as claimed in claim 1, wherein the block copolymer has a poly(monovinyl aromatic hydrocarbon) content in the range from 5 to 45% by weight.

3. Adhesive composition as claimed in claim 1 or 2, wherein the tackifying resin is a hydrogenated hydrocarbon resin.

4. A process for preparing pellets containing an adhesive composition comprising:
(i) adding a block copolymer containing at least two poly(monovinyl aromatic hydrocarbon) blocks and at least one hydrogenated poly(conjugated diene) block, or a blend of the block copolymer with up to 25 parts by weight of plasticiser per 100 parts by weight of block copolymer; 20 to 80 parts by weight of an at least partially hydrogenated tackifying resin per 100 parts by weight of block copolymer; 10 to 60 parts by weight of a polybutene-1 per 100 parts by weight of block copolymer, wherein the polybutene-1 has a weight average molecular weight in the range of 60,000 to 1,000,000, and wherein the polybutene-1 is a polybutene-1 homopolymer or copolymer in which the non-butene comonomer content is in the range from 1 to 50 mole%, and optionally up to 40 parts by weight of aromatic resin per 100 parts by weight of block copolymer to separate feed inlet openings in an extruder or add a blend of said components to the extruder;
(ii) blending and extruding the components in the extruder to obtain an extrudate;
(iii) pelletizing the extrudate with an underwater pelletizer to obtain wet pellets; and
(iv) drying the wet pellets to obtain pellets containing the adhesive composition and optionally treating the wet or dry pellets with a dusting agent in an amount of 0.05 to 10% by weight of the total adhesive composition.

5. A protective film comprising an adhesive layer and a substrate layer, wherein the adhesive layer comprises:
(i) a block copolymer containing at least two poly(monovinyl aromatic hydrocarbon) blocks and at least one hydrogenated poly(conjugated diene) block;
(ii) 20 to 80 parts by weight of an at least partially hydrogenated tackifying resin per 100 parts by weight of block copolymer;
(iii) 0 to 40 parts by weight of aromatic resin per 100 parts by weight of block copolymer;
(iv) 10 to 60 parts by weight of a polybutene-1 per 100 parts by weight of block copolymer, wherein the polybutene-1 has a weight average molecular weight in the range of 60,000 to 1,000,000, and wherein the polybutene-1 is a polybutene-1 homopolymer or copolymer in which the non-butene comonomer content is in the range from 1 to 50 mole%; and
(v) 0 to 25 parts by weight of plasticiser per 100 parts by weight of block copolymer.

6. A protective film as claimed in claim 5, wherein the substrate is selected from polyethylene and polypropylene.

7. A process for preparing a protective film by co-extrusion of an extrudable substrate layer and an adhesive layer as defined in claim 5, which process comprises feeding an adhesive composition to form the adhesive layer, to a first extruder and feeding a substrate composition to form the substrate layer to a second extruder, melting the adhesive composition and the substrate composition and conveying the substantially molten adhesive composition and substrate composition with the first and second extruder respectively, at the same time to a die in hydraulic communication with the first and second extruder and co-extruding a film comprising the adhesive layer and the substrate layer.

8. Articles containing a protective film as claimed in claim 5 or 6.

## Patentansprüche

1. Klebstoffzusammensetzung umfassend:
i) ein Blockcopolymer enthaltend wenigstens zwei Blöcke eines Poly-(monovinylaromatischen Kohlenwasserstoffs) und wenigstens einen Block eines hydrierten Poly-(konjugierten Diens);
ii) 20 bis 80 Gewichtsteile eines wenigstens teilweise hydrierten Harzes zur Erhöhung der Klebrigkeit auf 100 Gewichtsteile des Blockcopolymers;
iii) 0 bis 40 Gewichtsteile eines aromatischen Harzes auf 100 Gewichtsteile des Blockcopolymers;
iv) 10 bis 60 Gewichtsteile eines Poly-1-butens auf 100 Gewichtsteile an Blockcopolymer, wobei das Poly-1-buten ein massegemitteltes Molekulargewicht im Bereich von 60.000 bis 1.000.000 aufweist und wobei das Poly-1-buten ein Homopolymer oder Poly-1-butencopolymer ist, bei dem der Gehalt an Comonomer, der nicht Buten ist, im Bereich von 1 bis 50 Mol-% liegt; und
v) 0 bis 25 Gewichtsteile eines Weichmachers auf 100 Gewichtsteile an Blockcopolymer.

2. Klebstoffzusammensetzung nach Anspruch 1, wobei das Blockcopolymer einen Gehalt an Poly-(monovinylaromatischem Kohlenwasserstoff) im Bereich von 5 bis 45 Gew.-% aufweist.

3. Klebstoffzusammensetzung nach Anspruch 1 oder 2, wobei das Harz zur Erhöhung der Klebrigkeit ein hydriertes Kohlenwasserstoffharz ist.

4. Verfahren zur Herstellung von Pellets enthaltend eine Klebstoffzusammensetzung umfassend:
i) die Zugabe eines Blockcopolymers, das wenigstens zwei Blöcke eines Poly-(monovinylaromatischen Kohlenwasserstoffs) enthält und wenigstens einen hydrierten Block eines Poly-(konjugierten Diens), oder eine Mischung des Blockcopolymers mit bis zu 25 Gewichtsteilen eines Weichmachers auf 100 Gewichtsteile an Blockcopolymer; 20 bis 80 Gewichtsteile eines wenigstens teilweise hydrierten Harzes zur Erhöhung der Klebrigkeit auf 100 Gewichtsteile an Blockcopolymer; 10 bis 60 Gewichtsteile eines Poly-1-butens auf 100 Gewichtsteile an Blockcopolymer, und wobei das Poly-1-buten ein massegemitteltes Molekulargewicht im Bereich von 60.000 bis 1.000.000 aufweist und wobei das Poly-1-buten ein Poly-1-butenhomopolymer oder -copolymer ist, bei dem der Gehalt des Comonomers, das kein Buten ist, im Bereich von 1 bis 50 Mol-% liegt und wahlweise bis zu 40 Gewichtsteile eines aromatischen Harzes auf 100 Gew.-% an Blockcopolymer, zu getrennten Zufuhreinlassöffnungen bei einem Extruder oder die Zugabe einer Mischung dieser Komponenten in den Extruder;
ii) das Vermischen und das Extrudieren der Bestandteile im Extruder, um ein Extrudat zu erhalten;
üi) das Pelletisieren des Extrudats mit einer Unterwasserpelletisiermaschine, um nasse Pellets zu erhalten; und
iv) das Trocknen der nassen Pellets, um Pellets zu erhalten, die die Klebstoffzusammensetzung enthalten und wahlweise das Behandeln der nassen oder trockenen Pellets mit einem Streupuder in einer Menge von 0,05 bis 10 Gew.-% bezogen auf die gesamte Klebstoffzusammensetzung.

5. Schutzfilm umfassend eine Klebstoffschicht und eine Substratschicht, und wobei die Klebstoffschicht folgendes umfasst:
i) ein Blockcopolymer enthaltend wenigstens zwei Blöcke eines Poly-(monovinylaromatischen Kohlenwasserstoffs) und wenigstens einen Block eines hydrierten Poly-(konjugierten Diens);
ii) 20 bis 80 Gewichtsteile eines wenigstens teilweise hydrierten Harzes zur Erhöhung der Klebrigkeit auf 100 Gewichtsteile an Blockcopolymer;
iii) 0 bis 40 Gew.-% eines aromatischen Harzes auf 100 Gew.-% an Blockcopolymers;
iv) 10 bis 60 Gewichtsteile eines Poly-1-butens auf 100 Gewichtsteile an Blockcopolymer, und wobei das Poly-1-buten ein massegemitteltes Molekulargewicht im Bereich von 60.000 bis 1.000.000 aufweist und wobei das Poly-1-buten ein Poly-1-butenhomopolymer oder Copolymer ist, bei dem der Gehalt an Copolymer, der kein Buten ist, im Bereich von 1 bis 50 Mol-% liegt; und
v) 0 bis 25 Gew.-% eines Weichmachers auf 100 Gewichtsteile an Blockcopolymer.

6. Schutzfilm nach Anspruch 5, wobei das Substrat ausgewählt ist aus Polyethylen und Polypropylen.

7. Verfahren zur Herstellung eines Schutzfilms durch Coextrusion einer extrudierbaren Substratschicht und einer Klebstoffschicht, wie sie in Anspruch 5 definiert sind, wobei das Verfahren das Zuführen einer Klebstoffzusammensetzung zur Bildung der Klebstoffschicht in einen ersten Extruder umfasst und das Zuführen einer Substratzusammensetzung zur Bildung der Substratschicht in einem zweiten Extruder, das Schmelzen der Klebstoffzusammensetzung und der Substratzusammensetzung und das gleichzeitige Transportieren der im Wesentlichen geschmolzenen Klebstoffzusammensetzung und der Substratzusammensetzung aus dem ersten bwz. zweiten Extruder zu einer Düse, die in einer hydraulischen Verbindung mit dem ersten und zweiten Extruder steht und das Coextrudieren eines Films umfassend die Klebstoffschicht und die Substratschicht.

8. Formteile enthaltend einen Schutzfilm nach Anspruch 5 oder 6.

## Revendications

1. Composition adhésive comprenant :
(i) un copolymère séquencé contenant au moins deux séquences de poly(hydrocarbure monovinyl-aromatique) et au moins une séquence de poly(diène conjugué) hydrogénée;
(ii) 20 à 80 parties en poids d'une résine adhésivante au moins partiellement hydrogénée par 100 parties en poids de copolymère séquencé;
(iii) 0 à 40 parties en poids de résine aromatique par 100 parties en poids de copolymère séquencé;
(iv) 10 à 60 parties en poids d'un polybutène-1 par 100 parties en poids de copolymère séquencé, où le polybutène-1 a un poids moléculaire moyen en poids dans la plage de 60 000 à 1 000 000 et où le polybutène-1 est un homopolymère ou un copolymère de polybutène-1 dans lequel la teneur en comonomère autre que le butène se situe dans la plage de 1 à 50% en mole; et
(v) 0 à 25 parties en poids de plastifiant par 100 parties en poids de copolymère séquencé.

2. Composition adhésive selon la revendication 1, dans laquelle le copolymère séquencé a une teneur en poly(hydrocarbure monovinylaromatique) dans la plage de 5 à 45% en poids.

3. Composition adhésive selon la revendication 1 ou 2, dans laquelle la résine adhésivante est une résine hydrocarbonée hydrogénée.

4. Procédé de préparation de pastilles contenant une composition adhésive comprenant :
(i) l'addition d'un copolymère séquencé contenant au moins deux séquences de poly(hydrocarbure monovinyl-aromatique) et au moins une séquence de poly(diène conjugué) hydrogénée, ou un mélange du copolymère séquencé avec jusqu'à 25 parties en poids de plastifiant par 100 parties en poids de copolymère séquencé; 20 à 80 parties en poids d'une résine adhésivante au moins partiellement hydrogénée par 100 parties en poids de copolymère séquencé; 10 à 60 parties en poids d'un polybutène-1 par 100 parties en poids de copolymère séquencé, où le polybutène-1 a un poids moléculaire moyen en poids dans la plage de 60 000 à 1 000 000 et où le polybutène-1 est un homopolymère ou un copolymère de polybutène-1 dans lequel la teneur en comonomère autre que le butène se situe dans la plage de 1 à 50% en mole; et éventuellement jusqu'à 40 parties en poids de résine aromatique par 100 parties en poids de copolymère séquencé pour séparer les ouvertures d'entrée d'alimentation dans une extrudeuse ou ajouter un mélange desdits composants dans l'extrudeuse;
(ii) le mélange et l'extrusion des composants dans l'extrudeuse pour obtenir un extrudat;
(iii) le pastillage de l'extrudat avec une pastilleuse sous eau pour obtenir des pastilles humides; et
(iv) le séchage des pastilles humides pour obtenir des pastilles contenant la composition adhésive et éventuellement le traitement des pastilles humides ou sèches avec un agent de poudrage en quantité de 0,05 à 10% en poids de la composition adhésive totale.

5. Film protecteur comprenant une couche adhésive et une couche de substrat, dans lequel la couche adhésive comprend :
(i) un copolymère séquencé contenant au moins deux séquences de poly(hydrocarbure monovinyl-aromatique) et au moins une séquence de poly(diène conjugué) hydrogénée;
(ii) 20 à 80 parties en poids d'une résine adhésivante au moins partiellement hydrogénée par 100 parties en poids de copolymère séquencé;
(iii) 0 à 40 parties en poids de résine aromatique par 100 parties en poids de copolymère séquencé;
(iv) 10 à 60 parties en poids d'un polybutène-1 par 100 parties en poids de copolymère séquencé, où le polybutène-1 a un poids moléculaire moyen en poids dans la plage de 60 000 à 1 000 000 et où le polybutène-1 est un homopolymère ou un copolymère de polybutène-1 dans lequel la teneur en comonomère autre que le butène se situe dans la plage de 1 à 50% en mole; et
(v) 0 à 25 parties en poids de plastifiant par 100 parties en poids de copolymère séquencé.

6. Film protecteur selon la revendication 5, dans lequel le substrat est choisi parmi le polyéthylène et le polypropylène.

7. Procédé de préparation d'un film protecteur par co-extrusion d'une couche de substrat extrudable et d'une couche adhésive comme défini dans la revendication 5, lequel procédé comprend l'acheminement d'une composition adhésive, pour former la couche adhésive, dans une première extrudeuse et l'acheminement d'une composition de substrat, pour former la couche de substrat, dans une seconde extrudeuse, la fusion de la composition adhésive et de la composition de substrat et l'acheminement de la composition adhésive et de la composition de substrat sensiblement fondues avec la première et la seconde extrudeuse, respectivement, en même temps à une filière en communication hydraulique avec la première et la seconde extrudeuse, et la co-extrusion d'un film comprenant la couche adhésive et la couche de substrat.

8. Articles contenant une couche protectrice selon la revendication 5 ou 6.
